# NOUVEAU FASCICULE DE BREVET EUROPEEN

(11) **EP 3 763 184 B2**
(45) Date de publication et mention de la décision concernant l'opposition: **21.05.2025**
(45) Mention de la délivrance du brevet: 12.01.2022
(21) Numéro de dépôt: 20169512.9
(22) Date de dépôt: 15.04.2020
(51) Int. Cl.: A01C 7/06, A01C 7/20, A01C 15/00

(54) **ELEMENT SEMEUR ET SEMOIR**
SÄELEMENT UND SÄMASCHINE
SEEDER ELEMENT AND SOWING MACHINE

(30) Priorité: 10.07.2019 EP 19290052
(43) Date de publication de la demande: 13.01.2021
(73) Titulaire: Ribouleau Monosem, 79240 Largeasse (FR)
(72) Inventeur: PUICHAULT, Alexis, 79140 Cerizay (FR); RENOUX, Thomas, 85770 Vix (FR); BODIN, Sébastien, 79220 Surin (FR); BOUTRAND, Fabrice, 79200 Thouars (FR)
(74) Mandataire: John Deere GmbH & Co. KG

(56) Documents cités:
- EP-A1- 2 060 163
- WO-A1-98/42177
- DE-A1- 3 439 476
- FR-A5- 2 053 831
- US-A- 4 485 939
- US-A- 4 541 549
- ANONYMOUS: "Einzelkorn-Sämaschinen - Planter", KUHN PROSPEKT, 1 September 1999 (1999-09-01), XP055974367

## Description

### Objet de l'invention

La présente invention concerne un élément semeur pour la distribution concomitante de plusieurs produits granulaires et un semoir comprenant un tel élément semeur.

### Etat de la technique

Dans le domaine agricole, il est courant d'épandre des produits de traitement du sol ou des cultures, tels que les engrais, les herbicides ou les insecticides, à l'aide soit de dispositifs de pulvérisation, si les produits sont sous une forme liquide, soit à l'aide de dispositifs de distribution de produits granulaires, s'ils sont sous forme de grains ou de granulés.

S'agissant de produits phytosanitaires granulaires, il est courant de les épandre, de façon concomitante, avec les graines à semer, à proximité de ces dernières, ce qui présente l'avantage d'optimiser l'action du produit sur la graine ou la plante en début de germination ou germée. Généralement, cela s'effectue à l'aide de dispositifs dédiés comprenant une trémie spécifique et un système de distribution spécifique à chaque trémie.

Par exemple, le document FR 1 595 598 décrit un semoir comprenant une première trémie comprenant de l'engrais et une seconde trémie comprenant des graines, le tube de descente de l'engrais se situant entre deux tubes de descente des graines déposant les graines dans des sillons séparés, refermés par des rouleaux enfouisseurs, le sillon comprenant l'engrais étant différent et sensiblement parallèle aux sillons comprenant les graines, le sillon comprenant l'engrais étant refermé par un rouleau enfouisseur distinct.

Le document DE 3 439 476 décrit, quant à lui, un semoir permettant de déposer des produits granulaires, à différentes hauteurs dans un sillon formé par un soc distributeur de produits granulaires, qui sont acheminés au sol via des guides séparés présents dans le corps du soc, un coutre étant prévu pour fermé partiellement le sillon après la dépose du premier produit granulaire et avant la dépose du second produit granulaire, le semoir comprenant en outre une roue de tassement et de fermeture du sillon, permettant à la terre au centre du sillon partiellement recouvert d'être plus pressé que celui de la région externe du sillon, avant que le sillon ne soit totalement refermé. Le soc distributeur du semoir comprend une glissière de sélection du guide d'acheminement des produits granulaire pour que le second produit granulaire soit déposé dans le sillon, à la même profondeur que le premier produit granulaire, ou à une profondeur moins importante dans le sillon.

D'autres éléments semeurs similaires sont connus de WO 98/42177 A1 et EP 2 060 163 A1.

Toutefois, cette solution présente l'inconvénient d'avoir une distribution verticale dans le sol des différents produits granulaires qui est limitée et peu optimale.

### Buts de l'invention

La présente invention vise à fournir un élément semeur, un semoir comprenant un tel élément semeur, qui ne présentent pas les inconvénients de l'état de la technique.

La présente invention vise à fournir une alternative aux solutions de l'état de la technique existantes.

L'invention propose une solution qui soit adaptable afin de déposer de façon concomitante plusieurs produits granulaires à des différentes positions relatives les uns par rapport aux autres, permettant d'obtenir une meilleure et plus large distribution verticale, mais également horizontale, des produits granulaires dans le sol.

### Résumé de l'invention

La présente invention porte sur un élément semeur de produits granulaires à distribuer au sol comprenant un châssis, des moyens pour ouvrir un sillon dans le sol, des moyens pour refermer le sillon, des moyens de tassement des produits granulaires déposés au fond du sillon ouvert, qui sont disposés derrière les moyens pour ouvrir le sillon et devant les moyens pour refermer le sillon, un premier ensemble de distribution d'un premier produit granulaire, comprenant une trémie principale, des premiers moyens de distribution pour distribuer un premier produit granulaire, en communication avec la trémie principale, des premiers moyens de convoyage du premier produit granulaire jusqu'au sol, à une première position de distribution relative (P1) se situant entre les moyens pour ouvrir le sillon et lesdits moyens de tassement, au moins un second ensemble de distribution supplémentaire d'au moins un produit granulaire supplémentaire, des moyens de distribution aptes à déposer le au moins un produit granulaire supplémentaire à la position de distribution relative (P1), et à une autre position de distribution relative (P2) se situant avant les moyens pour ouvrir le sillon, ou à une autre position de distribution relative (P3) se situant après les moyens pour refermer le sillon, l'ensemble de distribution supplémentaire, coopérant avec ou comprenant des moyens de sélection pour le dépôt du au moins produit granulaire supplémentaire à l'une ou l'autre des positions de distribution, relatives (P1), (P2) ou (P3), et à la fois aux positions de distribution relatives (P1) et (P2), (P1) et (P3), ou (P2) et (P3), ). Lesdits moyens de distribution dudit ensemble de distribution supplémentaire sont distincts, et ne faisant pas partie, desdits premiers moyens de distribution dudit premier ensemble de distribution d'un premier produit granulaire. L'ensemble de distribution supplémentaire est, ou comprend, un second ensemble de distribution d'un second produit granulaire comprenant une première trémie annexe, des seconds moyens de distribution pour distribuer ledit second produit granulaire au sol, en communication avec ladite première trémie annexe, ledit second ensemble de distribution étant apte à déposer ledit second produit granulaire aux positions de distribution relative (P1) et/ou (P2), et/ou un troisième ensemble de distribution d'un troisième produit granulaire comprenant une seconde trémie annexe et des troisièmes moyens de distribution pour distribuer un troisième produit granulaire au sol, qui sont en communication avec ladite seconde trémie annexe, ledit troisième ensemble de distribution étant apte à déposer ledit troisième produit granulaire positions de distribution relative (P1) et/ou (P3).

Selon des modes particuliers de l'invention, l'élément semeur selon l'invention comprend au moins une, ou une combinaison quelconque appropriée dans le cadre des revendications annexées, des caractéristiques suivantes :
- l'ensemble de distribution supplémentaire étant apte à déposer le produit granulaire supplémentaire à une position de distribution relative supplémentaire (P4) se situant après les moyens de tassement et avant les moyens pour refermer le sillon,
- le troisième ensemble de distribution étant apte à déposer le troisième produit granulaire positions de distribution relative (P1), (P3) et (P4),
- le second ensemble de distribution et le troisième ensemble de distribution coopèrent avec ou comprennent respectivement des moyens de convoyage comprenant une pluralité de goulottes de distribution, chacune correspondant à une position de distribution relative (P1) à (P3) ou à (P4) et se rejoignant en un nœud de distribution,
- les moyens de convoyage comprennent une vanne de sélection à plusieurs voies, disposée au niveau du nœud de distribution,
- la première trémie annexe est intégrée à ou dans la trémie principale,
- la première trémie annexe est un caisson indépendant fixé de façon amovible dans la trémie principale,
- la première trémie annexe est un compartiment distinct dans la trémie principale, les trémies partageant une ou plusieurs parois communes et étant séparées par au moins une paroi de séparation amovible et mobile.
- la paroi de séparation amovible est mobile sur un ou plusieurs rails formés sur la surface interne d'une ou de deux parois de la trémie principale,
- les premiers moyens de distribution et les seconds moyens de distribution sont disposés à l'aplomb des moyens pour ouvrir le sillon,
- le premier ensemble de distribution est apte à distribuer des semences, l'ensemble de distribution supplémentaire est apte à distribuer des produits phytosanitaires granulaires ou des fertilisants granulaires.

La présente invention porte aussi sur un semoir comprenant un ou plusieurs éléments semeurs selon l'invention.

### Brève description des figures

La figure 1 est une représentation schématique d'une vue de coté d'un mode de réalisation de l'élément semeur selon l'invention.
La figure 2 est la même représentation que celle de la figure 1.
La figure 3 est une la représentation schématique du mode de réalisation de l'élément semeur des figures 1 et 2, mais selon une vue du coté opposé.
La figure 4 est la même représentation que celle de la figure 3.
La figure 5 est une représentation schématique d'une vue de coté de la partie supérieure de l'élément semeur selon l'invention.
La figure 6 est une représentation schématique d'une vue en perspective de la trémie principale de l'élément semeur selon l'invention.

### Description détaillée de l'invention

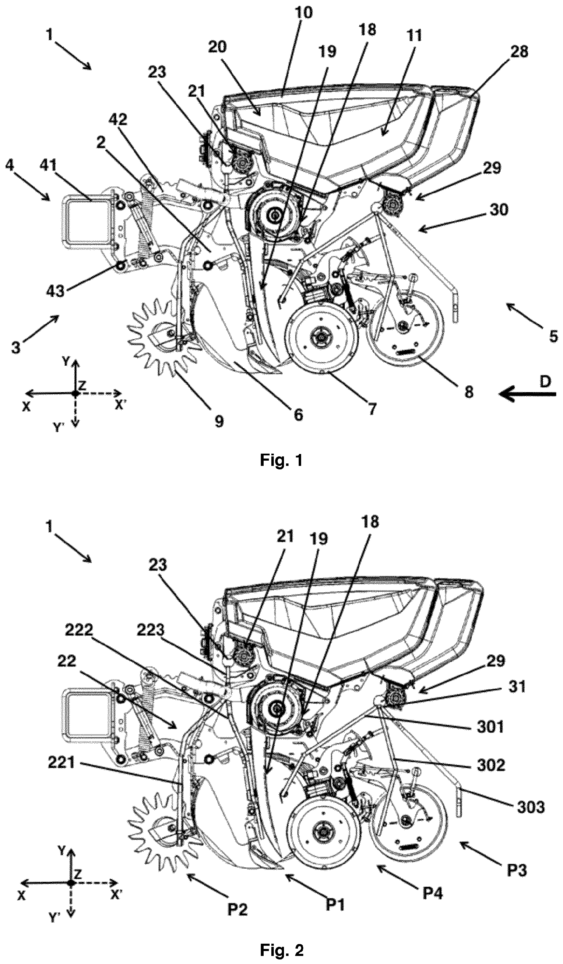

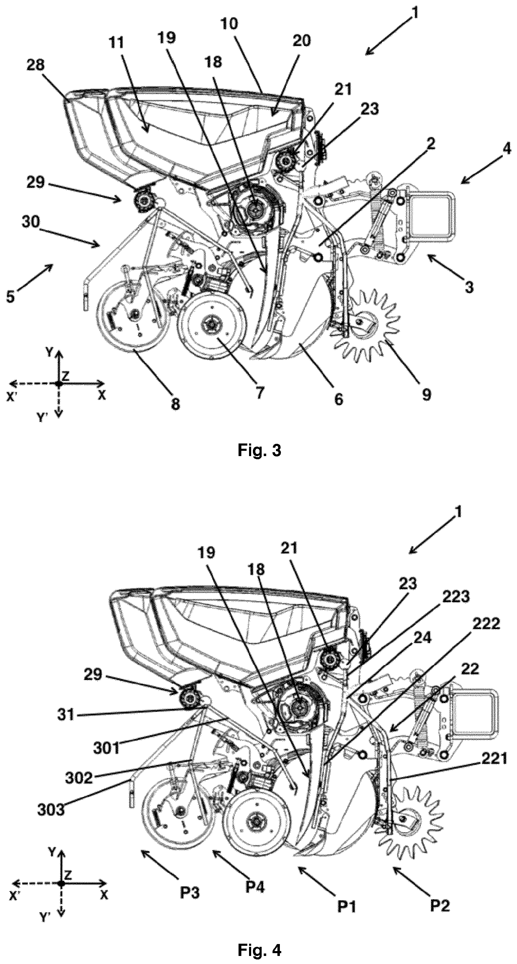

Dans la suite de la description et des revendications, les termes « haut », « bas », « au-dessus », « en dessous », « supérieur », « inférieur », « vertical » et « horizontal », « avant » et « arrière », « devant » et « derrière », font référence à la position normale de l'élément semeur 1 selon l'invention, et des éléments qui le composent, lors de son utilisation normale, et, en particulier, ils font référence à sa ou leurs positions telle(s) que représentée(s) aux figures 1 à 6, et au sens de déplacement D de l'élément semeur 1.

L'élément semeur 1 selon l'invention est monté sur un châssis 2, autotracté, ou bien porté ou tracté par un engin agricole, par exemple un tracteur. Le châssis 2 comprend une partie avant 3, qui est définie selon le sens de déplacement D de l'élément semeur 1 lors de son utilisation normale, tel que représenté à la figure 1. Pour un élément semeur 1 tracté, il s'agit de la partie 3 se situant à proximité de l'arrière de l'engin agricole, et portant des moyens d'attelage 4 permettant de le lier de façon réversible à l'engin agricole, et une partie arrière 5, qui est opposée à ladite partie avant 3.

De préférence, les moyens d'attelage 4 comprennent une barre d'outils 41, à laquelle le châssis 2 est lié par l'intermédiaire de deux paires de bras 42, 43, sensiblement parallèles et articulés, formant un double parallélogramme déformable, disposé sensiblement horizontalement, permettant un réglage vertical, selon l'axe Y'-Y, de l'élément semeur 1.

L'élément semeur 1 comprend des moyens 6 pour ouvrir un sillon dans le sol, de préférence d'une profondeur contrôlée, qui sont, ou comprennent, des disques ouvreurs, et comprenant de préférence également une ou plusieurs roues de jauges permettant de régler, en fonction de leur position, la profondeur du sillon et éventuellement également des moyens pour façonner la forme du fond du sillon.

L'élément semeur 1 comprend des moyens 7 de tassement d'un ou des produits granulaires déposés au fond du sillon ouvert. De préférence, ces moyens 7 sont, ou comprennent, au moins une roue plombeuse.

L'élément semeur 1 comprend en outre des moyens 8 pour refermer le sillon, qui sont, ou comprennent, un ou plusieurs disques ou roues de fermeture, s'étendant derrière les moyens 6 pour ouvrir le sillon, et en arrière des moyens 7 de tassement s'ils sont présents. De préférence, ces moyens 8 sont disposés en arrière de l'élément semeur 1.

L'élément semeur 1 peut comprendre en outre des moyens 9 chasses débris pour chasser des résidus de culture, des mottes de terre ou des pierres qui sont, ou comprennent, au moins une roue rotative, disposée en avant de l'élément semeur 1.

L'élément semeur 1 comprend un premier ensemble de distribution d'un premier produit granulaire, qui est de préférence une graine ou une semence.

Ce premier ensemble comprend une trémie 10, dite « principale », apte à comprendre, et en fonctionnement comprenant, les graines à semer, qui est de préférence disposée en partie haute du châssis 2, au dessus, à l'aplomb ou en arrière des moyens 6 pour ouvrir un sillon, en avant des moyens 8 pour refermer le sillon. De préférence, elle est fixée au châssis 2 de façon amovible, ce qui présente l'avantage de faciliter son remplacement, pour des raisons de maintenance ou lors du fonctionnement du l'élément semeur 1, par exemple par une autre trémie principale 10 identique à celle devant être remplacée, l'autre trémie principale 10 étant de préférence pré-remplie.

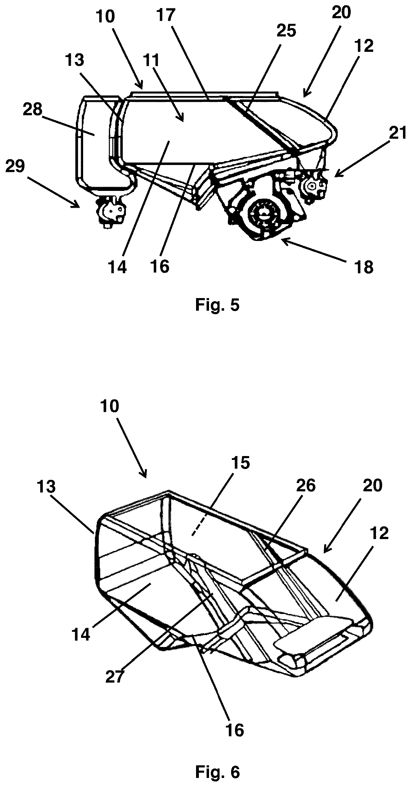

La trémie principale 10 peut adopter toutes les dimensions et formes possibles ou adéquats, définissant un volume intérieur 11. De préférence, elle possède une forme sensiblement parallélépipédique et comprend une paroi avant 12, une paroi arrière 13, opposée à la paroi avant 12, une première paroi latérale 14, une seconde paroi latérale 15, opposée à la première paroi latérale 14, une paroi inférieure 16 et une paroi supérieure 17, opposée à la paroi inférieure 16 (figures 5 et 6), la paroi supérieure 17 étant, de préférence, ouverte ou partiellement ouverte afin de permettre le chargement d'au moins le premier produit granulaire, et obturable, et en fonctionnement obturée, par un couvercle mobile.

Le premier ensemble de distribution comprend en outre des premiers moyens 18 de distribution pour distribuer le premier produit granulaire, des graines à semer, qui sont en communication avec la trémie principale 10, par exemple par une ouverture, de préférence obturable, pratiquée dans la paroi inférieure 16 de la trémie principale 10.

Ces premiers moyens 18 de distribution sont des moyens distincts, et ne font pas partie, des moyens 6 d'ouverture du sillon. Il ne s'agit pas de moyens 18 pressurisés ; toutefois, ils peuvent comprendre ou coopérer avec de préférence des moyens pneumatiques, les graines étant chargées, à l'unité, par aspiration ou dépression, sur un disque de distribution alvéolaire, disposé sensiblement verticalement, et qui est en rotation, les graines étant ensuite relâchées une à une, par soufflage ou arrêt de la dépression. A ces fins, le premier ensemble de distribution peut comprendre ou coopérer avec des moyens d'aspiration et/ou de soufflage.

Les premiers moyens 18 de distribution sont disposés, de préférence, sous la trémie principale 10, au dessus, et en arrière, des moyens 6 pour ouvrir un sillon, par exemple pour un dépôt gravitaire des graines.

Ces premiers moyens 18 de distribution sont aptes à déposer les premiers produits granulaires au sol à une position de distribution relative P1 se situant juste en arrière des moyens 6 pour ouvrir le sillon, par rapport au sens de déplacement D de l'élément semeur 1 lors de son fonctionnement normal, par exemple entre les deux disques ouvreurs, la position P1 se situant en avant des moyens 7 de tassement s'ils sont présents, et en tout étant de cause en avant des moyens 8 pour refermer le sillon, pour un dépôt des premiers produits granulaires dans le sillon formé.

De préférence, les premiers moyens 18 de distribution coopèrent avec des premiers moyens de convoyage 19 permettant de diriger les graines pendant leur chute et d'éviter qu'elles ne tombent en dehors du sillon, des premiers moyens de convoyage 19 coopérant avantageusement également avec des moyens de transfert des graines depuis le disque de distribution des premiers moyens de distribution vers les premiers moyens de convoyage 19 des graines au sol.

L'élément semeur 1 comprend en outre au moins un ensemble de distribution supplémentaire d'au moins un produit granulaire supplémentaire, en forme d'un second et/ou un troisième ensemble de distribution d'un second et/ou troisième produit granulaire, pour le dépôt du ou des produits granulaires supplémentaires à des positions de distribution relatives P1, P2, P3, et éventuellement P4, qui sont définies selon le sens de déplacement D de l'élément semeur 1 lors de son fonctionnement normal, et au regard de leur localisation par rapport aux moyens 6 pour ouvrir un sillon et aux moyens 8 pour refermer le sillon. Cela présente l'avantage de procurer une plus grande variabilité de positionnement du ou des produits granulaires supplémentaires, verticalement et horizontalement, dans le sillon et sur le sol.

Le produit granulaire supplémentaire peut également être une graine ou semences, mais de nature différente que celle du premier produit granulaire permettant un mode de plantation de plusieurs cultures simultanément. Néanmoins, de préférence, le second produit granulaire n'est pas une graine ou une semence, mais un produit ou un mélange de produits phytosanitaires granulaires, ou fertilisants granulaires, tels que par exemple des engrais, des herbicides, des insecticides, des nématicides, des fongicides, des pastilles anti-limaces, ou autres pesticides équivalents.

Le second ensemble de distribution comprend une première trémie 20, dite annexe, apte à comprendre, et en fonctionnement comprenant, un ou plusieurs produits phytosanitaires granulaires ou fertilisants granulaire, la première trémie annexe 20 étant de préférence disposée en partie haute du châssis 2, au dessus, à l'aplomb ou en arrière des moyens 6 pour ouvrir un sillon, en avant des moyens 7 pour refermer le sillon, avantageusement disposée en avant de la trémie principale 10 et accolée à cette dernière, les deux trémies 10 et 20 pouvant avantageusement partager une paroi commune.

Le second ensemble de distribution comprend des seconds moyens 21 de distribution pour distribuer un second produit granulaire au sol, qui sont en communication avec la première trémie annexe 20, par exemple par une ouverture, de préférence obturable, pratiquée dans la paroi inférieure de ladite trémie annexe 20.

Ces seconds moyens 21 de distribution sont des moyens distincts, et ne font pas partie, des moyens 6 d'ouverture du sillon, ni des premiers moyens 18 de distribution du premier produit granulaire.

Ces seconds moyens de distribution 21 sont aptes à déposer le second produit granulaire à deux différentes positions de distribution relatives P1 et/ou P2, qui sont relatives par rapport aux moyens 6 pour ouvrir le sillon, et définies également par rapport au sens de déplacement D de l'élément semeur 1 selon l'invention lors de son fonctionnement normal.

Les seconds moyens de distribution 21 sont aptes à déposer le second produit granulaire à la position de distribution relative P1, ou à proximité immédiate de cette dernière, telle que définie pour les premiers moyens 18 de distribution, à savoir en arrière des moyens 6 pour ouvrir le sillon et en avant des moyens 7 de tassement s'ils sont présents, et en tout état de cause en avant des moyens 8 pour refermer le sillon, par exemple entre les deux disques ouvreurs, pour un dépôt dans le sillon formé. Ainsi, le second produit granulaire se trouve dans le sillon, sensiblement à la même profondeur que le premier produit granulaire, en avant ou en arrière, à proximité ou proximité immédiate, du premier produit granulaire.

Ces seconds moyens de distribution 21 sont également aptes à déposer le second produit granulaire à une position de distribution relative P2, se situant avant les moyens 6 pour ouvrir le sillon, de préférence derrière les moyens 8 chasses débris s'ils sont présents, donc se situant hors du sillon. Ainsi, le second produit granulaire se trouve mélangé à la couche superficielle du sol lors de l'ouverture du sillon. Au sol, après le passage de l'élément semeur 1, le second produit granulaire peut se retrouver alors à différentes profondeur, à proximité de la surface du sol et/ou dans le fond du sillon, mais également à différentes distances horizontales du premier produit granulaire, à proximité ou proximité immédiate du premier produit granulaire, par exemple de la semence, permettant ainsi une plus large distribution verticale, mais également horizontale, des seconds produits granulaires par rapport aux premiers produits granulaires.

De préférence, le second produit granulaire est déposé dans le sillon, à la position de distribution relative P1, entre chaque graine, ou à proximité immédiate de chaque graine, ou hors du sillon, sur le sol non encore travaillé, à la position de distribution relative P2. Avantageusement, le second produit granulaire est déposé, à la fois, à la position de distribution relative P1 et à la position de distribution relative P2.

De préférence, les seconds moyens de distribution 21 coopèrent, comprennent, ou sont, également des seconds moyens de convoyage 22, et comprennent éventuellement également des moyens de transfert 23 pour le transfert du second produit granulaire des seconds moyens de distribution 21 aux seconds moyens de convoyage 22.

De préférence, les seconds moyens de convoyage 22 comprennent une pluralité de goulottes de distribution 221, 222, chaque goulotte 221, 222 correspondant à une position de distribution relative P1 ou P2, des goulottes 221, 222, qui, avantageusement se rejoignent en un nœud de distribution 24, connecté et coopérant avec les seconds moyens de distribution 21 du second produit granulaire.

Dans un autre mode de réalisation, le nœud de distribution 24 des goulottes de distribution 221, 222 se prolonge en une conduite supérieure 223 unique, qui est connectée et coopère avec les seconds moyens de distribution 21.

De préférence, le second ensemble de distribution comprend des moyens de sélection des positions de distribution auxquelles le second produit granulaire doit être déposé. Ces moyens de sélection peuvent être des moyens pour une sélection manuelle et/ou automatique d'une ou de deux goulottes de distribution 221, 222. De préférence, des moyens de commande contrôlent ces moyens de sélection.

Quelque soit le mode de réalisation de la goulotte ou des goulottes de distribution 221, 222, 223, les moyens de sélection sont, ou comprennent, une première vanne, de préférence deux, trois ou quatre voies, disposée au niveau du nœud de distribution 24 des goulottes de distribution du second produit granulaire.

Quelque soit les mode de réalisation de l'élément semeur 1 selon l'invention, la première trémie annexe 20 peut faire partie de, ou être intégrée dans, la trémie principale 10, ce qui présente l'avantage de procurer un encombrement réduit et une grande modularité. En effet, s'il n'est pas nécessaire de déposer un second produit granulaire au sol, la trémie principale 10 peut être uniquement utilisée pour les semences, ce qui leur confère un plus grand volume de stockage.

La première trémie annexe 20 peut prendre la forme d'un caisson indépendant, intégré à, ou dans, la trémie principale 10, de préférence fixé de façon réversible à la trémie principale 10, afin de pouvoir être remplacé facilement, lorsqu'il est vide, par un autre caisson, avantageusement pré-rempli d'un autre volume de seconds produits granulaires, l'autre caisson ayant le même volume que le caisson à remplacer, ou bien un volume différent, qui est choisi en fonction des besoins et de l'autonomie nécessaire en second produit granulaire. Pour un caisson indépendant qui serait intégré dans la trémie principale, son volume est inférieur à celui de la trémie principale 10, de préférence adéquat afin de pouvoir passer par l'ouverture de la paroi supérieure 17 de la trémie principale 10.

La première trémie annexe 20 peut prendre la forme d'un compartiment distinct dans la trémie principale 10 (figures 5 et 6), les deux trémies 10 et 20 partageant une ou plusieurs parois 12, 13, 14, 15, 16, 17, communes et étant séparées par au moins une paroi de séparation 25, amovible et mobile, de préférence coulissante, dans ou sur un ou deux rails 26, 27, ou pluralité de rails 26, 27, formés sur la surface interne d'une ou deux parois 14, 15 de la trémie principale 10 (figures 5 et 6), ce qui présente l'avantage d'une grande modularité, en permettant en particulier de pouvoir faire varier le volume respectif des deux trémies 10 et 20 en fonction des besoins en premier produit granulaire et/ou en second produit granulaire. De préférence, la paroi de séparation 25 est disposée de façon oblique par rapport aux parois inférieure 16 ou supérieure 17 de la trémie principale 10 (figure 5). Cela présente l'avantage de favoriser l'écoulement du produit granulaire par gravité et d'augmenter la largeur d'ouverture pour le chargement du produit granulaire en partie haute.

De préférence, la trémie principale 10 et la trémie annexe 20 partage une paroi inférieure 16 commune comprenant deux ouvertures distinctes, communiquant chacune avec respectivement les premiers et les seconds moyens de distribution, des ouvertures qui sont obturables indépendamment l'une de l'autre.

L'élément semeur 1 comprend en outre un troisième ensemble de distribution d'un troisième produit granulaire, qui de préférence, n'est pas une graine ou une semence, mais un produit ou un mélange de produits phytosanitaires ou fertilisants granulaires, tels que par exemple des engrais, des herbicides, des insecticides, des nématicides, des fongicides, des pastilles anti-limaces, ou autres pesticides équivalents.

Le troisième ensemble de distribution comprend une seconde trémie annexe 28 apte à comprendre, et en fonctionnement comprenant, un ou plusieurs produits phytosanitaires ou fertilisants granulaires, de préférence différent(s) de celui ou ceux de la première trémie annexe 20, la seconde trémie annexe 28 étant de préférence disposée en partie haute du châssis 2, au dessus, à l'aplomb ou en arrière des moyens 7 pour refermer le sillon, avantageusement disposée en arrière de la trémie principale 10 et accolée à cette dernière, les deux trémies 10 et 28 pouvant avantageusement partager une paroi commune.

Le troisième ensemble de distribution comprend des troisièmes moyens de distribution 29 pour distribuer un troisième produit granulaire au sol, qui sont en communication avec la seconde trémie annexe 28, par exemple par une ouverture, de préférence obturable, pratiquée dans la paroi inférieure de ladite trémie 28.

Ces troisièmes moyens de distribution 29 sont des moyens distincts, et ne font pas partie, des moyens 6 d'ouverture du sillon, ni des premiers moyens 18 de distribution du premier produit granulaire, ni des seconds moyens 21 de distribution du second produit granulaire.

Ces troisièmes moyens de distribution 29 sont aptes à déposer le troisième produit granulaire à au moins deux, de préférence, trois différentes positions de distribution P1, P3 et/ou P4, des positions relatives par rapport aux moyens 6 pour ouvrir le sillon et par rapport aux moyens 8 pour fermer le sillon et définies également par rapport au sens de déplacement D de l'élément semeur 1 selon l'invention lors de son fonctionnement normal.

Les troisièmes moyens de distribution 29 sont aptes à déposer le troisième produit granulaire à la position de distribution relative P1, ou à proximité immédiate de cette dernière, telle que définie pour les premiers moyens 18 de distribution, à savoir en arrière des moyens 6 pour ouvrir le sillon et en avant des moyens 7 de tassement s'ils sont présents, et en tout état de cause en avant des moyens 8 pour refermer le sillon, par exemple entre les deux disques ouvreurs, pour un dépôt dans le sillon formé, en avant ou en arrière, à proximité ou proximité immédiate du premier et/ou du second produit granulaire. Ainsi, le troisième produit granulaire se trouve dans le sillon, à la même profondeur que le premier produit granulaire et éventuellement le second produit granulaire, en avant ou en arrière, à proximité ou proximité immédiate, de ce ou ces derniers.

Ces troisièmes moyens de distribution 29 sont également aptes à déposer le troisième produit granulaire à une position de distribution relative P3, se situant après les moyens 8 pour fermer le sillon, donc hors du sillon, sur le sol du sillon refermé.

L'élément semeur 1 comprend des moyens 7 de tassement des produits granulaires déposés au fond du sillon ouvert et le troisième ensemble de distribution est de préférence également apte à déposer le produit granulaire supplémentaire à une position de distribution relative supplémentaire P4, se situant après les moyens 7 de tassement et avant les moyens 8 pour refermer le sillon. Ainsi, au sol, le troisième produit granulaire peut se retrouver à différentes profondeurs, dans le sillon, sensiblement à la même profondeur que le premier et/ou le second produit granulaire, en avant ou en arrière, à proximité ou proximité immédiate, du premier et/ou du second produit granulaire, et/ou à une profondeur dans le sillon moins importante, et/ou à la surface du sol sur le sillon refermé, donc hors du sillon. Cela permet une plus large distribution verticale, mais également horizontale, non seulement du troisième produit granulaire par rapport au premier produit granulaire, mais également par rapport aux seconds produits granulaires si ces derniers sont employés en combinaison avec les troisièmes produits granulaires.

Dans un mode de réalisation particulier, le troisième produit granulaire est déposé au sol à l'aide de troisièmes moyens de convoyage 30, qui de préférence coopèrent avec des moyens de transfert du troisième produit granulaire depuis les troisièmes moyens de distribution 29.

Les moyens de convoyage 30 comprennent une pluralité de goulottes de distribution 301, 302, 303, chaque goulotte 301, 302, 303 correspondant à une positions de distribution, des goulottes 301, 302, 303 qui, avantageusement se rejoignent en un nœud de distribution 31, connecté et coopérant avec les troisièmes moyens de distribution 29. Dans un autre mode de réalisation, le nœud de distribution 31 des goulottes de distribution 301, 302, 303 se prolonge en une conduite supérieure unique, qui est connectée et coopère avec les troisièmes moyens de distribution 29.

De préférence, le troisième ensemble de distribution comprend des moyens de sélection des positions de distribution auxquelles le troisième produit granulaire doit être déposé. Ces moyens de sélection peuvent être des moyens pour une sélection manuelle et/ou automatique d'une ou plusieurs des goulottes de distribution 301, 302, 303. De préférence, des moyens de commande contrôlent ces moyens de sélection, et avantageusement, peuvent être identiques ou être ceux qui contrôlent les moyens de sélection du deuxième ensemble de distribution.

Quelque soit le mode de réalisation de la ou des goulottes de distribution 301, 302, 303, les moyens de sélection sont, ou comprennent, une seconde vanne, deux ou trois voies, disposée au niveau du nœud de distribution 31 des goulottes de distribution 301, 302, 303 du second produit granulaire.

Le semoir selon l'invention comprend un ou plusieurs éléments semeurs 1 selon l'invention, de préférence monté(s) sur un châssis porteur, porté ou trainé par un engin agricole. Le châssis porteur comprend alors des moyens d'attelage afin de le lier, de façon réversible, avec l'engin agricole, qui le porte ou le tracte. De préférence, le semoir comprend une ou plusieurs roues, de préférence mobile(s) afin d'être relevables ou rétractables, afin qu'elles ne soient pas en contact avec le sol, par exemple durant les manœuvres ou le transport du semoir.

## Revendications

1. Élément semeur (1) de produits granulaires à distribuer au sol comprenant :
- des moyens (6) pour ouvrir un sillon dans le sol,
- des moyens (8) pour refermer le sillon,
- des moyens (7) de tassement des produits granulaires déposés au fond du sillon ouvert, qui sont disposés derrière les moyens (6) pour ouvrir le sillon et devant les moyens (8) pour refermer le sillon,
- un premier ensemble de distribution d'un premier produit granulaire, comprenant une trémie principale (10), des premiers moyens de distribution (18) pour distribuer un premier produit granulaire, en communication avec ladite trémie principale (10), des premiers moyens de convoyage (19) dudit premier produit granulaire jusqu'au sol, à une première position de distribution relative (P1) se situant entre lesdits moyens (6) pour ouvrir le sillon et lesdits moyens (7) de tassement,
- au moins un ensemble de distribution supplémentaire d'au moins un produit granulaire supplémentaire comprenant des moyens de distribution aptes à déposer ledit au moins produit granulaire supplémentaire à ladite position de distribution relative (P1), et à une autre position de distribution relative (P2) se situant avant lesdits moyens (6) pour ouvrir le sillon, ou à une autre position de distribution relative (P3) se situant après lesdits moyens (8) pour refermer le sillon, ledit ensemble de distribution supplémentaire, coopérant avec ou comprenant des moyens de sélection pour le dépôt dudit au moins un produit granulaire supplémentaire à l'une ou l'autre desdites positions de distribution relatives (P1), (P2), ou (P3), et à la fois auxdites positions de distribution relatives (P1) et (P2), (P1) et (P3), ou (P2) et (P3), lesdits moyens de distribution dudit ensemble de distribution supplémentaire étant distincts, et ne faisant pas partie, desdits premiers moyens de distribution (18) dudit premier ensemble de distribution d'un premier produit granulaire,
- dans lequel l'ensemble de distribution supplémentaire est, ou comprend, un second ensemble de distribution d'un second produit granulaire comprenant une première trémie annexe (20), des seconds moyens de distribution (21) pour distribuer ledit second produit granulaire au sol, en communication avec ladite première trémie annexe (20), ledit second ensemble de distribution étant apte à déposer ledit second produit granulaire aux positions de distribution relative (P1) et/ou (P2), et/ou un troisième ensemble de distribution d'un troisième produit granulaire comprenant une seconde trémie annexe (28) et des troisièmes moyens de distribution (29) pour distribuer un troisième produit granulaire au sol, qui sont en communication avec ladite seconde trémie annexe (28), ledit troisième ensemble de distribution étant apte à déposer ledit troisième produit granulaire positions de distribution relative (P1) et/ou (P3).

2. L'élément semeur (1) selon la revendication 1, dans lequel l'ensemble de distribution supplémentaire étant apte à déposer le produit granulaire supplémentaire à une position de distribution relative supplémentaire (P4) se situant après lesdits moyens (7) de tassement et avant lesdits moyens (8) pour refermer le sillon.

3. L'élément semeur (1) selon la revendication 2, ou ledit troisième ensemble de distribution étant apte à déposer ledit troisième produit granulaire positions de distribution relative (P1), (P3) et (P4).

4. L'élément semeur (1) selon la revendication 3, dans lequel le second ensemble de distribution et le troisième ensemble de distribution coopèrent avec ou comprennent respectivement des moyens de convoyage (22, 30) comprenant une pluralité de goulottes de distribution (221, 222, 301, 302, 303), chacune correspondant à une position de distribution relative (P1) à (P3) ou à (P4) et se rejoignant en un nœud de distribution (24, 31).

5. L'élément semeur (1) selon la revendication 4, dans lequel les moyens de convoyage (22, 30) comprennent une vanne de sélection à plusieurs voies, disposée au niveau du nœud de distribution (24, 31).

6. L'élément semeur (1) selon l'une quelconque des revendications 3 à 5, dans lequel la première trémie annexe (20) est intégrée à, ou dans, la trémie principale (10).

7. L'élément semeur (1) selon la revendication 6, dans lequel la première trémie annexe (20) est un caisson indépendant fixé de façon amovible dans la trémie principale (10).

8. L'élément semeur (1) selon l'une quelconque des revendications 3 à 7, dans lequel la première trémie annexe (20) est un compartiment distinct dans la trémie principale (10), lesdites trémies (10, 20) partageant une ou plusieurs parois (12, 13, 14, 15, 16, 17) communes et étant séparées par au moins une paroi de séparation (25) amovible et mobile.

9. L'élément semeur (1) selon la revendication 8, dans lequel la paroi de séparation (24) amovible est mobile sur un ou plusieurs rails (26, 27) formés sur la surface interne d'une ou de deux parois (14, 15) de la trémie principale (10).

10. L'élément semeur (1) selon l'une quelconque des revendications 3 à 9, dans lequel les premiers moyens de distribution (18) et les seconds moyens de distribution (21) sont disposés à l'aplomb des moyens (6) pour ouvrir le sillon.

11. L'élément semeur (1) selon l'une quelconque des revendications précédentes, dans lequel le premier ensemble de distribution est apte à distribuer des semences, l'ensemble de distribution supplémentaire est apte à distribuer des produits phytosanitaires granulaires ou des fertilisants granulaires.

12. Semoir comprenant un ou plusieurs éléments semeurs (1) selon l'une quelconque des revendications 1 à 11.

## Patentansprüche

1. Säelement (1) für körniger Produkte zur Ausgabe am Boden umfassend:
- Mittel (6) zum Öffnen einer Furche im Boden,
- Mittel (8) zum Wiederverschließen der Furche,
- Mittel (7) zum Festdrücken der körnigen Produkte, die am Boden der offenen Furche aufgebracht sind, die hinter den Mitteln (6) zum Öffnen der Furche und vor den Mitteln (8) zum Wiederverschließen der Furche angeordnet sind,
- eine erste Anordnung zur Ausgabe eines ersten körnigen Produkts, umfassend einen Haupttrichter (10), erste Ausgabemittel (18) zur Ausgabe eines ersten körnigen Produkts in Verbindung mit dem Haupttrichter (10), erste Mittel zum Fördern (19) des ersten körnigen Produkts bis zum Boden in einer ersten relativen Ausgabeposition (P1), die sich zwischen den Mitteln (6) zum Öffnen der Furche und den Mitteln (7) zum Festdrücken befindet,
- wenigstens eine zusätzliche Ausgabeanordnung für mindestens ein zusätzliches körniges Produkt, die Ausgabemittel umfasst, die geeignet sind, das wenigstens eine zusätzliche körnige Produkt an der relativen Ausgabeposition (P1) und an einer anderen relativen Ausgabeposition (P2), die sich vor den Mitteln (6) zum Öffnen der Furche befindet, oder an einer anderen relativen Ausgabeposition (P3), die sich nach den Mitteln (8) zum Wiederverschließen der Furche befindet, auszubringen, wobei die zusätzliche Ausgabeanordnung mit Auswahlmitteln für die Ausbringung des mindestens einen zusätzlichen körnigen Produkts an der einen oder anderen der relativen Ausgabepositionen (P1), (P2) oder (P3) und gleichzeitig an den relativen Ausgabepositionen (P1) und (P2), (P1) und (P3), oder (P2) und (P3) zusammenwirkt oder diese umfasst, wobei die Ausgabemittel der zusätzlichen Ausgabeanordnung getrennt und nicht Teil der ersten Ausgabemittel (18) der ersten Anordnung zur Ausgabe eines ersten körnigen Produkts sind,
wobei die zusätzliche Ausgabeanordnung eine zweite Anordnung zur Ausgabe eines zweiten körnigen Produkts, die einen ersten Nebentrichter (20), zweite Ausgabemittel (21) zur Ausgabe des zweiten körnigen Produkts am Boden in Verbindung mit dem ersten Nebentrichter (20) umfasst, wobei die zweite Ausgabeanordnung geeignet ist, das zweite körnige Produkt an den relativen Ausgabepositionen (P1) und/oder (P2) auszubringen, und/oder eine dritte Anordnung zur Ausgabe eines dritten körnigen Produkts, die einen zweiten Nebentrichter (28) und dritte Ausgabemittel (29) zur Ausgabe eines dritten Produkts am Boden, die mit dem zweiten Nebentrichter (28) in Verbindung stehen, umfasst, wobei die dritte Ausgabeanordnung geeignet ist, das dritte körnige Produkt an den relativen Ausgabepositionen (P1) und/oder (P3) auszubringen, ist oder umfasst.

2. Säelement (1) nach Anspruch 1, wobei die zusätzliche Ausgabeanordnung geeignet ist, das zusätzliche körnige Produkt an einer zusätzlichen relativen Ausgabeposition (P4) auszubringen, die sich nach den Mitteln (7) zum Festdrücken und vor den Mitteln (8) zum Wiederverschließen der Furche befindet.

3. Säelement (1) nach Anspruch 3, wobei die zusätzliche Ausgabeanordnung geeignet ist, das zusätzliche körnige Produkt an den relativen Ausgabeposition (P1), (P3) und (P4) auszubringen.

4. Säelement (1) nach Anspruch 3, wobei die zweite Ausgabeanordnung und die dritte Ausgabeanordnung jeweils mit Fördermitteln (22, 30), die eine Mehrzahl von Ausgabekanälen (221, 222, 301, 302, 303) umfassen, zusammenwirken oder diese umfassen, die jeweils einer relativen Ausgabeposition (P1) bis (P3) oder bis (P4) entsprechen und in einem Ausgabeknoten (24, 31) zusammenkommen.

5. Säelement (1) nach Anspruch 4, wobei die Fördermittel (22, 30) ein Mehrwege-Auswahlventil umfassen, das am Ausgabeknoten (24, 31) angeordnet ist.

6. Säelement (1) nach einem der Ansprüche 3 bis 5, wobei der erste Nebentrichter (20) am oder im Haupttrichter (10) integriert ist.

7. Säelement (1) nach Anspruch 6, wobei der erste Nebentrichter (20) ein unabhängiger Kasten ist, der abnehmbar im Haupttrichter (10) befestigt ist.

8. Säelement (1) nach einem der Ansprüche 3 bis 7, wobei der erste Nebentrichter (20) ein gesonderter Raum im Haupttrichter (10) ist, wobei die Trichter (10, 20) eine oder mehrere gemeinsame Wände (12, 13, 14, 15, 16, 17) teilen und durch mindestens eine abnehmbare und bewegliche Trennwand (25) getrennt sind.

9. Säelement (1) nach Anspruch 8, wobei die abnehmbare Trennwand (24) auf einer oder mehreren Schienen (26, 27) beweglich ist, die auf der Innenfläche einer oder zweier Wände (14, 15) des Haupttrichters (10) ausgebildet sind.

10. Säelement (1) nach einem der Ansprüche 3 bis 9, wobei die ersten Ausgabemittel (18) und die zweiten Ausgabemittel (21) lotrecht zu den Mitteln (6) zum Öffnen der Furche angeordnet sind.

11. Säelement (1) nach einem der vorhergehenden Ansprüche, wobei die erste Ausgabeanordnung geeignet ist, Samen auszugeben, wobei die zusätzliche Ausgabeanordnung geeignet ist, körnige Pflanzenschutzmittel oder körnige Dünger auszugeben.

12. Sämaschine umfassend ein oder mehrere Säelemente (1) nach einem der Ansprüche 1 bis 11.

## Claims

1. Seeder element (1) for granular products to be distributed on the ground comprising:
- means (6) for opening a furrow in the ground,
- means (8) for reclosing the furrow,
- means (7) for packing down granular products deposited at the bottom of the open furrow, which are arranged behind the means (6) for opening the furrow and in front of the means (8) for reclosing the furrow,
- a first distribution assembly for a first granular product, comprising a main hopper (10), first distribution means (18) for distributing a first granular product, connected with said main hopper (10), first conveying means (19) for conveying said first granular product to the ground, at a first relative distribution position (P1) located between said means (6) for opening the furrow and the means (7) for packing down,
- at least one additional distribution assembly for at least one additional granular product comprising distribution means capable of depositing said at least one additional granular product at said relative distribution position (P1), and at another relative distribution position (P2) located before said means (6) for opening the furrow, or at another relative distribution position (P3) situated after said means (8) for reclosing the furrow, said additional distribution assembly cooperating with or comprising selection means for the deposition of said at least one additional granular product at one or other of said relative distribution positions (P1), (P2) or (P3), and at the same time at said relative distribution positions (P1) and (P2), (P1) and (P3), or (P2) and (P3), wherein said distribution means of the additional distribution assembly are separated from and not part of said first distribution means (18) of the first distribution assembly for a first granular product,
wherein the additional distribution assembly is, or comprises, a second distribution assembly for a second granular product comprising a first ancillary hopper (20), second distribution means (21) for distributing said second granular product on the ground, connected with said first ancillary hopper (20), said second distribution assembly being able to deposit said second granular product at relative distribution positions (P1) and/or (P2), and/or a third distribution assembly for a third granular product comprising a second ancillary hopper (28) and third distribution means (29) for distributing a third granular product on the ground, which are connected with said second ancillary hopper (28), said third distribution assembly being able to deposit said third granular product at relative distribution positions (P1) and/or (P3).

2. The seeder element (1) according to claim 1, wherein the additional distribution assembly is able to deposit the additional granular product at an additional relative distribution position (P4) located after said packing-down means (7) and before said means (8) for reclosing the furrow.

3. The seeder element (1) according to claim 2, wherein said third distribution assembly is able to deposit said third granular product at relative distribution positions (P1), (P3) and (P4)

4. The seeder element (1) according to claim 3, wherein the second distribution assembly and the third distribution assembly cooperate with or respectively comprise conveying means (22, 30) comprising a plurality of distribution chutes (221, 222, 301, 302, 303), each corresponding to a relative distribution position (P1) to (P3) or to (P4) and meeting at a distribution node (24, 31).

5. The seeder element (1) according to claim 4, wherein the conveying means (22, 30) comprise a multiway selection valve, arranged at the distribution node (24, 31).

6. The seeder element (1) according to any one of claims 3 to 5, wherein the first ancillary hopper (20) is incorporated with, or in, the main hopper (10).

7. The seeder element (1) according to Claim 6, wherein the first ancillary hopper (20) is an independent box fixed removably in the main hopper (10).

8. The seeder element (1) according to any one of claims 3 to 7, wherein the first ancillary hopper (20) is a distinct compartment in the main hopper (10), said hoppers (10, 20) sharing one or more common walls (12, 13, 14, 15, 16, 17) and being separated by at least one removable and movable separating wall (25).

9. The seeder element (1) according to claim 8, wherein the removable separating wall (24) is movable on one or more rails (26, 27) formed on the inner surface of one or two walls (14, 15) of the main hopper (10).

10. The seeder element (1) according to any one of claims 3 to 9, wherein the first distribution means (18) and the second distribution means (21) are arranged vertically above the means (6) for opening the furrow.

11. The seeder element (1) according to any one of the preceding claims, wherein the first distribution assembly is able to distribute seeds, the additional distribution assembly is able to distribute granular phytosanitary products or granular fertilizers.

12. Sowing machine comprising one or more seeder elements (1) according to any one of Claims 1 to 11.
